# EUROPEAN PATENT APPLICATION

(11) **EP 4 794 407 A1**
(43) Date of publication of application: **19.08.2026**
(21) Application number: 24875913.6
(22) Date of filing: 27.02.2024
(51) Int. Cl.: H04W 56/00

(54) **UPLINK SYNCHRONIZATION METHOD, TERMINAL TO BE ACCESSED, BASE STATION, AND COMPUTER-READABLE STORAGE MEDIUM**

(30) Priority: 13.10.2023 CN 202311333378
(71) Applicant: Shenzhen Inovance Technology Co., Ltd., Shenzhen, Guangdong 518000 (CN)
(72) Inventor: JIN, Xing, Shenzhen, Guangdong 518000 (CN); LI, Changgeng, Shenzhen, Guangdong 518000 (CN); ZHOU, Xiong, Shenzhen, Guangdong 518000 (CN); ZHANG, Huanhuan, Shenzhen, Guangdong 518000 (CN); RUAN, Shuisheng, Shenzhen, Guangdong 518000 (CN); LI, Yicong, Shenzhen, Guangdong 518000 (CN)
(74) Representative: Osterhoff, Utz
(86) International application number: PCT/CN2024/078640
(87) International publication number: WO 2025/077084

(57) **Abstract**

The present application discloses an uplink synchronization method, a terminal to be accessed, a base station and a computer-readable storage medium, which belong to the technical field of wireless communications. The method includes: obtaining an uplink synchronization sequence allocated by a base station for the terminal to be accessed; sending an uplink synchronization signal to the base station on a time-frequency resource corresponding to the uplink synchronization sequence; and receiving a configuration resource fed back by the base station based on the uplink synchronization signal, and performing uplink synchronization based on the configuration resource. The present application aims to improve the access success rate of devices.

## Description

The present application claims priority to Chinese Patent Application No. 202311333378.9, filed on October 13, 2023, the content of which is incorporated herein by reference in its entirety.

### TECHNICAL FIELD

The present application relates to the technical field of wireless communication, and in particular to an uplink synchronization method, a terminal to be accessed, a base station, and a computer-readable storage medium.

### BACKGROUND

In wireless communication systems such as Long Term Evolution systems, New Radio systems, and wireless network systems, the initial access stage refers to the process of establishing a communication connection between a mobile terminal and a base station. In this stage, the mobile terminal needs to perform uplink synchronization with the base station to ensure that signals can be received and decoded by the base station.

Taking the Long Term Evolution system as an example, the specific process is as follows: the base station broadcasts access parameters through system information blocks; after receiving the random access parameters, the terminal selects an appropriate preamble from different code groups according to the parameters to generate and send an uplink synchronization sequence; subsequently, the base station and the terminal perform uplink synchronization response and access confirmation, thereby establishing a connection.

However, in the above process, the base station is only responsible for broadcasting access parameters, responding to and confirming access requests, and cannot determine the access sequence of terminals. If multiple terminal devices send uplink synchronization sequences within the same time window, access conflict may occur. Such conflicts will lead to signal interference and collision, affecting the access success rate of terminal devices.

The above content is only used to assist in understanding the technical solutions of the present application and does not constitute an admission that the above content is prior art.

### SUMMARY

The main purpose of the present application is to provide an uplink synchronization method, a terminal to be accessed, a base station, and a computer-readable storage medium, aiming to solve the technical problem of low access success rate of terminal devices.

To achieve the above purpose, the present application provides an uplink synchronization method applied to a terminal to be accessed. The uplink synchronization method includes the following steps:
obtaining an uplink synchronization sequence allocated by a base station for the terminal to be accessed;
sending an uplink synchronization signal to the base station on a time-frequency resource corresponding to the uplink synchronization sequence; and
receiving a configuration resource fed back by the base station based on the uplink synchronization signal, and performing uplink synchronization based on the configuration resource.

In one embodiment, receiving master system information sent by the base station;
demodulating the master system information to obtain scheduling information of secondary system information;
receiving corresponding secondary system information based on the scheduling information of the secondary system information; and
demodulating the secondary system information to obtain the uplink synchronization sequence allocated by the base station.

In one embodiment, the step of receiving the master system information sent by the base station includes:
receiving a primary synchronization signal and a secondary synchronization signal sent by the base station; and
determining a time-frequency domain position of the master system information based on the primary synchronization signal and the secondary synchronization signal, and receiving the master system information based on the time-frequency domain position.

In one embodiment, before the step of sending the uplink synchronization signal to the base station on the time-frequency resource corresponding to the uplink synchronization sequence, the method includes:
obtaining an expected receiving power of the uplink synchronization signal received by the base station; and
comparing a sum of the expected receiving power and a downlink path loss with a maximum transmit power of the terminal to be accessed, and determining a transmit power of the uplink synchronization signal based on the comparison result, so that the uplink synchronization signal is sent by the terminal to be accessed based on the transmit power.

In one embodiment, the uplink synchronization method further includes:
in response to that the configuration resource fed back by the base station based on the uplink synchronization signal is not received within a preset time, re-determining the transmit power of the uplink synchronization signal, and sending the uplink synchronization signal to the base station based on the re-determined transmit power.

In one embodiment, the step of re-determining the transmit power of the uplink synchronization signal includes:
obtaining a current expected receiving power of the uplink synchronization signal received by the base station;
in response to that the current expected receiving power is different from an expected receiving power obtained in a previous uplink synchronization process, comparing a sum of the current expected receiving power and the downlink path loss with the maximum transmit power, and determining a latest transmit power of the uplink synchronization signal based on the comparison result;
in response to that the current expected receiving power is same as an expected receiving power used in the previous uplink synchronization process, calculating a sum of the current expected receiving power, the downlink path loss and a preset power adjustment amount, and comparing the sum with the maximum transmit power to determine the latest transmit power of the uplink synchronization signal.

To achieve the above purpose, the present application provides an uplink synchronization method applied to a base station, including the following steps:
allocating an uplink synchronization sequence for a terminal to be accessed;
sending an allocated uplink synchronization sequence to the terminal to be accessed;
receiving an uplink synchronization signal fed back by the terminal to be accessed based on the uplink synchronization sequence; and
in response to that the uplink synchronization signal is matched with the uplink synchronization sequence, sending a configuration resource to the terminal to be accessed.

In one embodiment, before the step of allocating the uplink synchronization sequence for the terminal to be accessed, the method includes:
allocating all terminals to whitelists with different priorities based on service types of the terminals;
taking a whitelist with a highest priority as a candidate whitelist;
in response to that there is an unaccessed terminal in the candidate whitelist, setting the unaccessed terminal as the terminal to be accessed; and
in response to that there is no unaccessed terminal in the candidate whitelist, taking a whitelist of a next priority as a new candidate whitelist, and jumping to execute the step of in response to that there is the unaccessed terminal in the candidate whitelist, setting the unaccessed terminal as the terminal to be accessed.

In one embodiment, the step of allocating the uplink synchronization sequence for the terminal to be accessed includes:
obtaining all available uplink synchronization sequences, and determining correlations between each of the uplink synchronization sequences; and
allocating the uplink synchronization sequences to the terminal to be accessed in the whitelist based on the determined correlations between each of the uplink synchronization sequences.

In addition, to achieve the above purpose, the present application further provides a terminal to be accessed, which includes a memory, a processor, and an uplink synchronization program stored in the memory and operable on the processor. The uplink synchronization program is configured to implement the steps of the uplink synchronization method.

In addition, to achieve the above purpose, the present application further provides a base station, which includes a memory, a processor, and an uplink synchronization program stored in the memory and operable on the processor. The uplink synchronization program is configured to implement the steps of the uplink synchronization method.

In addition, to achieve the above purpose, the present application further provides a computer-readable storage medium having an uplink synchronization program stored thereon. The uplink synchronization program, when executed by a processor, implements the steps of the uplink synchronization method.

In a technical solution provided by the present application, a terminal to be accessed obtains an uplink synchronization sequence allocated by a base station, then sends an uplink synchronization signal to the base station on the corresponding time-frequency resource, and performs uplink synchronization based on configuration resource fed back by the base station. In this solution, controlling the terminal to perform uplink synchronization according to parameters allocated by the base station essentially hands over the initiative of access to the base station, that is, the base station can determine whether to allow the terminal to access and the access sequence. In this way, unified scheduling and management of terminal devices can be realized, conflicts between terminal devices can be avoided, and the access success rate of terminals can be improved.

### BRIEF DESCRIPTION OF THE DRAWINGS

FIG. 1 is a schematic flowchart of an uplink synchronization method according to a first embodiment of the present application.
FIG. 2 is a schematic flowchart of step S11 in the uplink synchronization method according to the first embodiment of the present application.
FIG. 3 is an interactive schematic diagram in the uplink synchronization method according to the first embodiment of the present application.
FIG. 4 is a schematic flowchart of step S111 in the uplink synchronization method according to the first embodiment of the present application.
FIG. 5 is a schematic flowchart of the uplink synchronization method according to a second embodiment of the present application.
FIG. 6 is a schematic diagram of transmit power calculation in the uplink synchronization method according to the second embodiment of the present application.
FIG. 7 is a schematic flowchart of the uplink synchronization method according to a third embodiment of the present application.
FIG. 8 is a schematic flowchart of the uplink synchronization method according to a fourth embodiment of the present application.
FIG. 9 is a schematic flowchart of step S31 in the uplink synchronization method according to the fourth embodiment of the present application.
FIG. 10 is a schematic structural diagram of a terminal to be accessed and a base station in a hardware operating environment involved in a solution of embodiments of the present application.

The realization of the objective, functional characteristics, and advantages of the present application are further described with reference to the accompanying drawings.

### DETAILED DESCRIPTION OF THE EMBODIMENTS

It should be understood that the specific embodiments described herein are only used to explain the present application and are not used to limit the present application.

In the initial access stage of the Long Term Evolution (LTE) system, random access parameters are issued through System Information Block Type 2, and the configuration is the same for all terminals. The transmit power of the uplink synchronization channel of a specific terminal cannot be specified, and the uplink synchronization sequence used by the terminal is independently selected by the terminal from Group A or Group B according to the configuration parameters.

In the initial access stage of the New Radio (NR) system, random access parameters are issued through System Information Block Type 1, similar to LTE, and the configuration parameters are the same for all terminals.

In the Wireless Fidelity (WIFI) system, a workstation discovers a network by scanning, and the network determines whether the workstation is allowed to access the network through identity authentication. The network scanning is divided into active scanning and passive scanning. The active scanning means that the workstation actively sends a Probe Request frame on a channel to request the network to respond with a Probe Response frame. The passive scanning means that the workstation passively receives Beacon frames on a channel and discovers the network through Beacon frames.

It can be seen from the above content that the sending process of the uplink synchronization sequence is configured through system information blocks, the parameters received by all terminals are the same, and the selection of the uplink synchronization sequence is determined by the terminal. The base station cannot determine the access sequence of terminals, nor can it configure power control parameters for some terminals. If multiple terminal devices send uplink synchronization sequences within the same time window, access conflicts may occur. Such conflicts lead to signal interference and collision, affecting the access success rate of terminal devices.

In view of the above problems, this solution adopts the method of allocating uplink synchronization sequences to terminals by the base station to realize the control of the uplink synchronization process of each terminal by the base station, thereby improving the access success rate of devices.

For a better understanding of the above technical solutions, the exemplary embodiments of the present application will be described in detail below with reference to the accompanying drawings. Although the exemplary embodiments of the present application are shown in the accompanying drawings, it should be understood that the present application can be implemented in various forms and should not be limited by the embodiments set forth herein. On the contrary, these embodiments are provided to enable a more thorough understanding of the present application and to fully convey the scope of the present application to those skilled in the art.

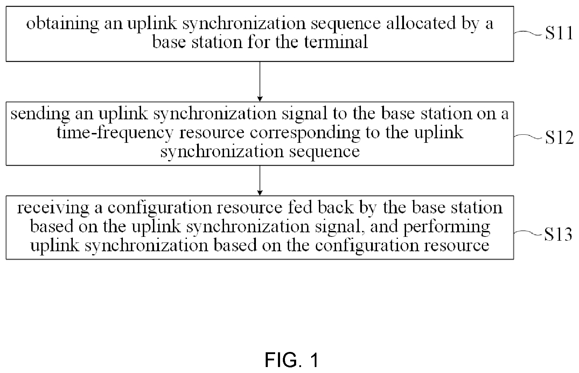

Embodiments of the present application provide an uplink synchronization method, referring to FIG. 1, which is a schematic flowchart of an uplink synchronization method according to a first embodiment of the present application.

In this embodiment, the uplink synchronization method is applied to a terminal to be accessed, and includes:
Step S11: obtaining an uplink synchronization sequence allocated by a base station for the terminal to be accessed.

It can be understood that a base station is a device in a wireless communication system for providing wireless signal coverage and connecting terminal devices. The terminal to be accessed refers to a terminal device in a mobile communication system, such as a mobile phone, a tablet computer, etc. The terminal to be accessed can realize voice calls, short message transmission, data transmission and other functions by communicating with the base station. The uplink synchronization sequence is a sequence used for uplink signal synchronization in a wireless communication system. In wireless communication technologies such as LTE, the uplink synchronization sequence is used to help a terminal synchronize time and frequency with a base station to ensure a normal communication connection.

The base station allocates different uplink synchronization sequences to different terminals to be accessed, and accordingly, each terminal to be accessed receives the uplink synchronization sequence allocated by the base station. The specific process is as follows:

In one embodiment, after receiving an access request sent by the terminal, the base station performs an admission process, including allocating the uplink synchronization sequence. Once the access request is accepted, the base station sends the uplink synchronization sequence allocated to the terminal to the terminal in a System Information Block (SIB). Accordingly, after receiving the system information block, the terminal parses the information therein, including the allocation information of the uplink synchronization sequence.

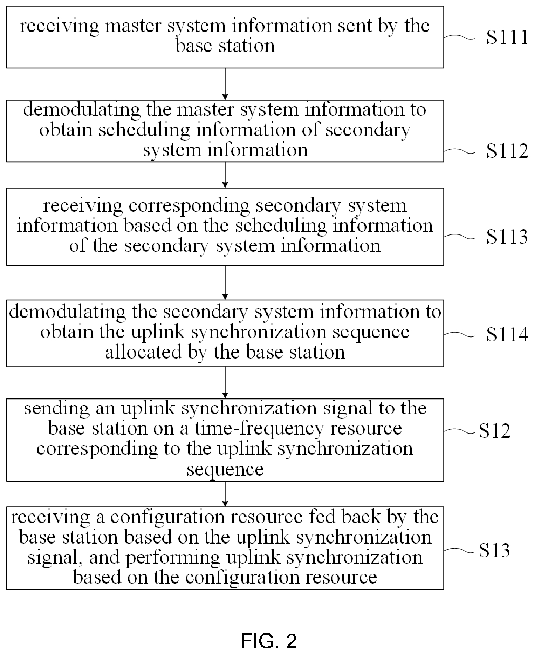

In an embodiment, referring to FIG. 2, step S11 includes:
Step S111: receiving master system information sent by the base station.

It can be understood that the Master System Information (MSI) is the basic configuration information of a wireless communication system, such as system bandwidth, subframe configuration, special subframe configuration, etc.. The Secondary System Information (SSI) is more detailed network and system information, such as cell ID, cell coverage, neighbor cell relationship, frequency and power configuration, system parameters, etc. Both MSI and SSI are usually sent to terminals in the form of system information blocks. There is a certain relationship and dependency between master system information and secondary system information. The base station carries the scheduling information of secondary system information through master system information, and the base station carries the deterministic scheduling information of the terminal through secondary system information.

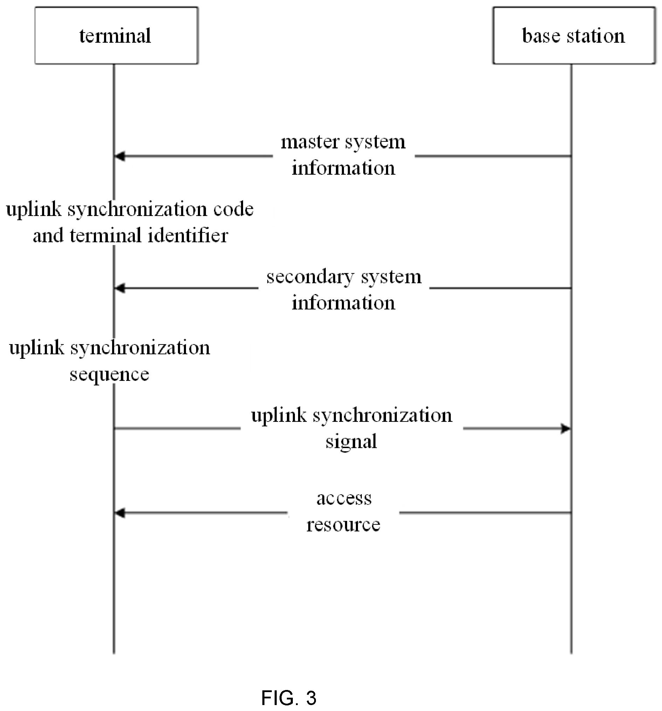

In one embodiment, referring to FIG. 3, the terminal can receive the master system information at a specific time according to a preset time slot or time window.

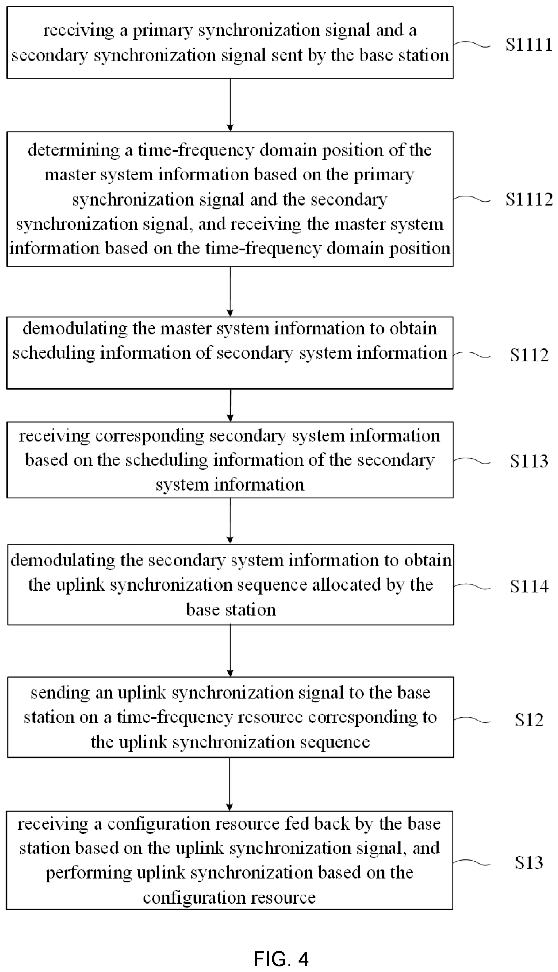

Referring to FIG. 4, step S111 includes:
step S1111: receiving a primary synchronization signal and a secondary synchronization signal sent by the base station; and
step S1112: determining a time-frequency domain position of the master system information based on the primary synchronization signal and the secondary synchronization signal, and receiving the master system information based on the time-frequency domain position.

It can be understood that the base station sends a primary synchronization signal, a secondary synchronization signal and master system information through the broadcast on the downlink path.

In one embodiment, the terminal to be accessed first receives the primary synchronization signal and the secondary synchronization signal, and then compares and calibrates the primary synchronization signal and the secondary synchronization signal respectively. In this process, the primary synchronization signal provides a main time reference, and the secondary synchronization signal provides an additional time reference. The position of the master system information in the time-frequency domain is determined according to the result of synchronization processing, where the time-domain position refers to the position of the message on the time axis, and the frequency-domain position refers to the position of the message on the frequency spectrum.

So far, the terminal can determine the arrival time of the message according to the time-domain position, and determine the frequency spectrum characteristics of the message according to the frequency-domain position, thereby receiving the master system information.
Step S112: demodulating the master system information to obtain scheduling information of secondary system information;
step S113: receiving corresponding secondary system information based on the scheduling information of the secondary system information; and
step S114: demodulating the secondary system information to obtain the uplink synchronization sequence allocated by the base station.

It can be understood that a demodulator is used to demodulate a signal. Since the demodulated signal usually contains many different data streams, a synchronization detector is needed to find the starting position of the target information. According to the position, the target message can be parsed from the master system information for subsequent processing through the target message.

In one embodiment, based on the above principle, the terminal to be accessed can obtain parameters related to uplink synchronization, including but not limited to secondary system information scheduling information. The secondary system information scheduling information includes parameter information such as the time-frequency position for sending secondary system information.

In another embodiment, the time-frequency domain position for sending secondary system information is determined according to the scheduling information of secondary system information, and then the corresponding secondary system information is received on the time-frequency domain position.

In another embodiment, the terminal to be accessed demodulates the secondary system information with the same specific principle as above, thereby obtaining the uplink synchronization sequence allocated by the base station.

It should be noted that one secondary system information may carry an uplink synchronization sequence index composed of multiple uplink synchronization sequences. There is a mapping relationship between the uplink synchronization sequence and the terminal identifier. In this case, after obtaining the uplink synchronization sequence index, the terminal to be accessed needs to determine the uplink synchronization sequence allocated by the base station for itself according to the terminal identifier in the secondary system information, where the terminal identifier refers to an identifier allocated by the base station for the terminal, such as a terminal ID, or an inherent identifier of the terminal, such as the MAC address of the terminal.

Different from overall sending, this solution adopts the method of sending master system information and secondary system information separately. Since the master system information usually contains necessary system configuration and parameter information, and the secondary system information contains some optional and additional system information. In this way, the terminal can select which messages to receive and parse according to its own needs, thereby reducing the transmission and processing of useless information, making the flexibility higher, reducing the occupation of wireless resources and the processing burden of the terminal, and improving the overall efficiency of the system.

Step S12: sending an uplink synchronization signal to the base station on a time-frequency resource corresponding to the uplink synchronization sequence.

It can be understood that the time-frequency resource refers to a combination of time and frequency resources, that is, the time position and frequency position mentioned above. When transmitting data in the communication system, resources need to be reasonably allocated in time and frequency to achieve efficient and reliable communication.

In one embodiment, since different uplink synchronization sequences correspond to different time-frequency resources, it is necessary to determine the time-frequency resource corresponding to the current uplink synchronization sequence. On the one hand, the sending time of the uplink synchronization signal is determined according to the time-domain position therein to ensure that the uplink synchronization signal is sent at the correct time to synchronize with the base station; on the other hand, sending parameters, such as the center frequency, bandwidth, power and other parameters of the sent signal, are configured according to the frequency-domain position therein to ensure that the uplink synchronization signal is sent on the correct frequency resource.

In this way, the terminal to be accessed can send the uplink synchronization signal to the base station according to the above sending time and sending parameters, so that the terminal device can synchronize with the base station and ensure communication at the correct time and frequency.

Step S13: receiving a configuration resource fed back by the base station based on the uplink synchronization signal, and performing uplink synchronization based on the configuration resource.

It can be understood that after receiving the uplink synchronization signal sent by the terminal to be accessed, the base station feeds back configuration resource based on the uplink synchronization signal, including but not limited to configuration resource related to wireless link connection, uplink transmission resource for sending uplink data, etc., which are not specifically limited in this embodiment.

Accordingly, the terminal to be accessed receives the fed back configuration resource and performs corresponding configuration operations.

In a technical solution provided in this embodiment, the terminal to be accessed obtains the uplink synchronization sequence allocated by the base station, then sends the uplink synchronization signal to the base station on the corresponding time-frequency resource, and performs uplink synchronization based on access resource fed back by the base station. In this solution, controlling the terminal to perform uplink synchronization according to parameters allocated by the base station essentially hands over the initiative of access to the base station, that is, the base station can determine whether to allow the terminal to access and the access sequence. In this way, unified scheduling and management of terminal devices can be realized, conflicts between terminal devices can be avoided, and the access success rate of terminals can be improved.

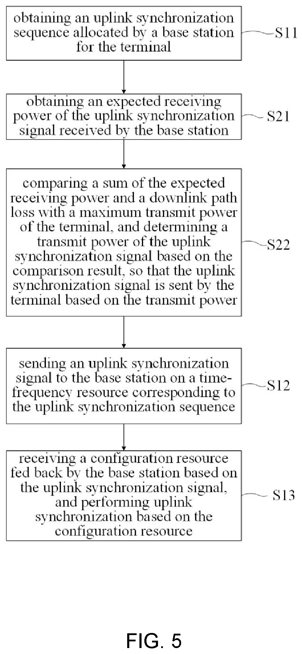

Referring to FIG. 5, a second embodiment of the uplink synchronization method of the present application is provided. Based on the first embodiment, before the step of sending the uplink synchronization signal to the base station on the time-frequency resource corresponding to the uplink synchronization sequence, the method includes:
step S21: obtaining an expected receiving power of the uplink synchronization signal received by the base station; and
step S22: comparing a sum of the expected receiving power and a downlink path loss with a maximum transmit power of the terminal to be accessed, and determining a transmit power of the uplink synchronization signal based on the comparison result, so that the uplink synchronization signal is sent by the terminal to be accessed based on the transmit power.

It can be understood that the expected receiving power refers to the frequency range in which the base station expects to receive the uplink synchronization signal sent by the terminal device subsequently; the transmit frequency refers to the frequency at which the terminal to be accessed sends the uplink synchronization signal; and the downlink path loss refers to the signal power loss caused by transmission media, transmission distance, transmission environment and other factors during the signal transmission process, which can be specifically calculated according to the downlink reference signal.

In one embodiment, the terminal to be accessed demodulates the master system information to obtain the expected receiving power of the uplink synchronization signal received by the base station, and the specific demodulation process is the same as that in the first embodiment, which will not be repeated here.

In one embodiment, the sum of the expected receiving power and the downlink path loss is calculated, and the sum is compared with the maximum transmit power of the terminal to be accessed. The smaller value is selected as the transmit power of the uplink synchronization signal, so that the terminal to be accessed sends the uplink synchronization signal according to the transmit power subsequently.

The specific calculation formula is as follows:
${P}_{USS} = min \left\{{P}_{CMAX}, {P}_{USS , init}+PL\right\}$
where P_{USS} is the transmit power of the uplink synchronization signal, P_{CMAX} is the maximum transmit power, P_{USS, init} is the expected receiving power, and PL is the downlink path loss.

The uplink synchronization method further includes:
when the configuration resource fed back by the base station based on the uplink synchronization signal is not received within a preset time, re-determining the transmit power of the uplink synchronization signal, and sending the uplink synchronization signal to the base station according to the re-determined transmit power.

It can be understood that the terminal starts a timer while sending the uplink synchronization signal. In addition, a counter can be used to record the transmission times T_{cnt} of the uplink synchronization signal, which is initialized to 1. When the uplink synchronization of the terminal fails, the transmit power of the uplink synchronization signal sent next time can be adjusted according to the cumulative value of transmission times.

In one case, the timer is stopped when the terminal receives the configuration resource fed back by the base station based on the uplink synchronization signal.

In another case, if the configuration resource fed back by the base station is still not received within the preset time after the timer is started, it indicates that the uplink synchronization signal may not be successfully transmitted to the base station due to signal interference, insufficient signal strength, channel congestion and other reasons. Therefore, the sending of the uplink synchronization signal is deemed failed, and the current uplink synchronization process fails. In this case, the terminal to be accessed needs to initiate the uplink synchronization process again according to the latest received master system information and secondary system information, as well as the corresponding uplink synchronization sequence in the secondary system information.

It should be noted that when initiating the uplink synchronization process again, it is necessary to re-determine the transmit power of the uplink synchronization signal and send the uplink synchronization signal to the base station again according to the re-determined transmit power.

The step of re-determining the transmit power of the uplink synchronization signal includes:
step A: obtaining a current expected receiving power of the uplink synchronization signal received by the base station;
step B: in response to that the current expected receiving power is different from an expected receiving power obtained in a previous uplink synchronization process, comparing a sum of the current expected receiving power and the downlink path loss with the maximum transmit power, and determining a latest transmit power of the uplink synchronization signal based on the comparison result; and
step C: in response to that the current expected receiving power is same as an expected receiving power used in the previous uplink synchronization process, calculating a sum of the current expected receiving power, the downlink path loss and a preset power adjustment amount, and comparing the sum with the maximum transmit power to determine the latest transmit power of the uplink synchronization signal.

It can be understood that spectrum resources in mobile communication systems are limited and require effective dynamic management and allocation. Therefore, the expected receiving frequency of the base station is also adjusted according to the current spectrum resource status to ensure the rational and maximum utilization of spectrum resources.

In one embodiment, the current expected receiving power of the uplink synchronization signal received by the base station, i.e., the latest expected receiving power, is obtained from the master system information. The specific obtaining steps are the same as above and will not be repeated here. In addition, the transmit power adjustment step of the uplink synchronization signal can also be obtained therefrom, that is, the increment of the transmit power compared with the previous time when the terminal re-sends the uplink synchronization signal after uplink synchronization failure, which is used for the subsequent calculation of the preset power adjustment amount.

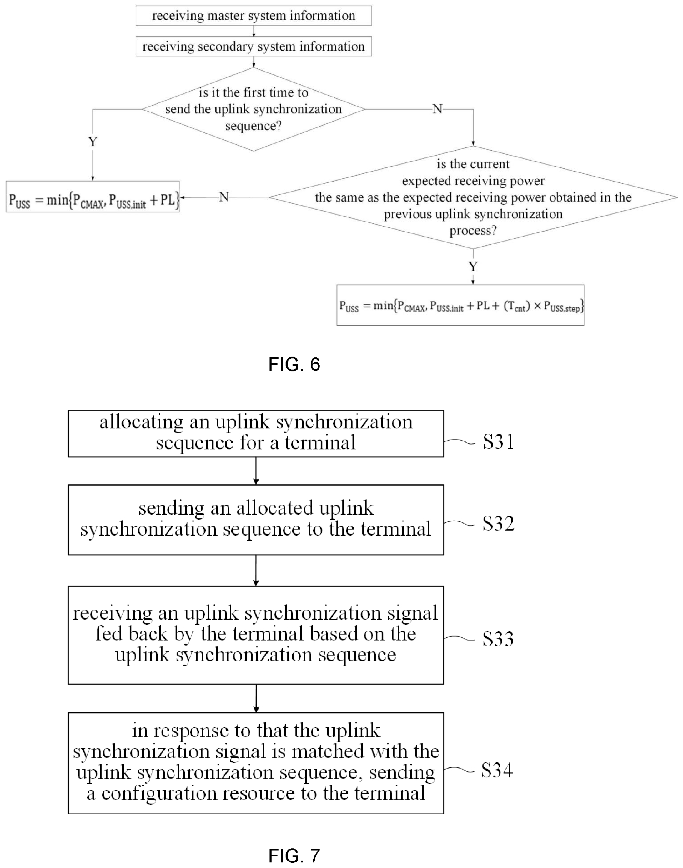

Referring to FIG. 6, if the current expected receiving power is different from the expected receiving power obtained in the previous uplink synchronization process, that is, the expected receiving power changes, the above formula can be used for calculation at this time, that is: P_{USS} = min{P_{CMAX}, P_{USS,init} + PL}.

If the current expected receiving power is the same as the expected receiving power obtained in the previous uplink synchronization process, that is, the expected receiving power does not change, the result will not change if the above formula is still used for calculation. If the same transmit power as before is still used, the sending will most likely fail again. Therefore, the sum of the current expected receiving power, the downlink path loss and the preset power adjustment amount is calculated, and then the sum is compared with the maximum transmit power. The smaller value is selected as the latest transmit power of the uplink synchronization signal.

In one embodiment, the value of the preset power adjustment amount can be directly set as a fixed value; alternatively, it can be calculated according to the number of sending failures and the transmit power adjustment step.

The specific formula is as follows:
${P}_{USS} = min \left\{{P}_{CMAX}, {P}_{USS , init}+PL+\left({T}_{cnt}\right)\times {P}_{USS , step}\right\} .$

P_{USS} is the transmit power of the uplink synchronization signal, P_{CMAX} is the maximum transmit power, P_{USS, init} is the current expected receiving power, PL is the downlink path loss, T_{cnt} is the number of times the uplink synchronization sequence has been sent failed by the terminal to be accessed, P_{USS, step} is the transmit power adjustment step, and the product of T_{cnt} and P_{USS, step} is the preset power adjustment amount.

In addition, the counting rule of the counter are as follows:
if the current expected receiving power is different from the expected receiving power obtained in the previous uplink synchronization process, the transmission count T_{cnt} of the uplink synchronization sequence is initialized to 1; and
if the current expected receiving power is the same as the expected receiving power obtained in the previous uplink synchronization process, the transmission count T_{cnt} of the uplink synchronization sequence is increased by 1.

In a technical solution provided in this embodiment, the transmit power is calculated according to the sum of the expected receiving power and the downlink path loss and the maximum transmit power of the terminal to be accessed, so that the terminal to be accessed sends the uplink synchronization signal according to the transmit power. If the sending fails, the transmit power is re-determined according to the obtained current expected receiving power, and the uplink synchronization signal is sent according to the re-determined transmit power. In this way, it is ensured that the signal can reach the expected receiving power level during transmission, which can improve the transmission quality and reliability of the signal, reduce the bit error rate and packet loss rate of the signal, thereby enhancing the system performance and user's experience.

Referring to FIG. 7, a third embodiment of the uplink synchronization method of the present application is provided. In this embodiment, the uplink synchronization method is applied to a base station, including:
step S31: allocating an uplink synchronization sequence for a terminal to be accessed; and
step S32: sending an allocated uplink synchronization sequence to the terminal to be accessed.

It can be understood that the base station can create a terminal list in advance to record all unaccessed terminals. When a terminal successfully accesses the base station, the base station will remove the terminal from the terminal to be accessed list.

In one embodiment, the base station can allocate an uplink synchronization sequence for each terminal to be accessed according to factors such as the current parameters and historical allocation status of the terminal to be accessed, and then send the allocated uplink synchronization sequence to the terminal to be accessed.

Exemplarily, different terminals may work in different channel quality environments, and the base station will allocate an appropriate uplink synchronization sequence for them according to the channel quality of the terminals to improve the synchronization performance.

Exemplarily, when there is interference from other terminals or external interference sources in the system, the base station will try to allocate an uplink synchronization sequence irrelevant to the interference source for the terminal to be accessed to improve the reliability and robustness of synchronization.
Step S33: receiving an uplink synchronization signal fed back by the terminal to be accessed based on the uplink synchronization sequence; and
step S34: in response to that the uplink synchronization signal is matched with the uplink synchronization sequence, sending a configuration resource to the terminal to be accessed.

In one embodiment, the base station receives the uplink synchronization signal fed back by the terminal to be accessed based on the uplink synchronization sequence. The specific receiving method is also performed according to the corresponding time-domain position and frequency-domain position, which will not be repeated here.

In one embodiment, if the uplink synchronization signal matches the uplink synchronization sequence, it indicates that the uplink synchronization signal sent by the terminal to be accessed is consistent with the uplink synchronization sequence pre-allocated by the base station for the terminal. This matching indicates that the terminal can send a synchronization signal according to the requirements of the base station, and the base station can correctly receive and decode the signal, enabling the terminal and the base station to communicate on the same clock and frequency, thereby realizing data transmission and other related operations. Therefore, the base station will further send configuration resource to the terminal to be accessed to realize uplink synchronization.

In a technical solution provided in this embodiment, the base station allocates and sends the uplink synchronization sequence to the terminal to be accessed, then receives the uplink synchronization signal fed back by the terminal to be accessed, and further sends configuration resource to the terminal to be accessed if the uplink synchronization signal matches the uplink synchronization sequence. The base station takes the initiative of terminal access through parameter allocation, and determines whether to allow the terminal to access and the access sequence. In this way, unified scheduling and management of terminal devices can be realized, conflicts between terminal devices can be avoided, and the terminal access success rate can be improved.

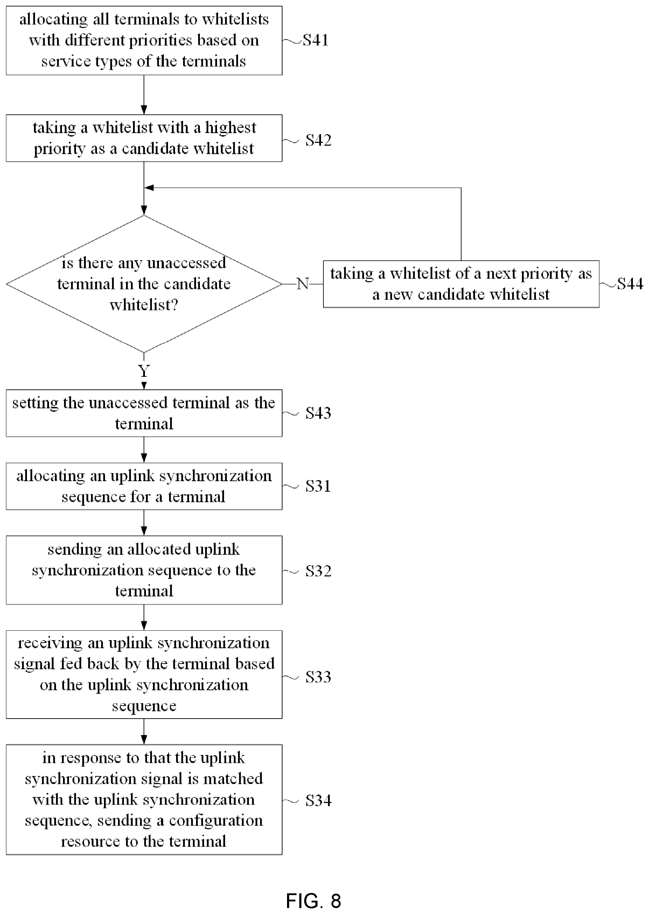

Referring to FIG. 8, a fourth embodiment of the uplink synchronization method of the present application is provided. Based on the embodiment shown in FIG. 8 above, before the step of allocating the uplink synchronization sequence for the terminal to be accessed:
step S41: allocating all terminals to whitelists with different priorities based on service types of the terminals.

It can be understood that the base station can set a whitelist mechanism. Specifically, the base station can dynamically adjust the whitelist configuration in the secondary system information according to factors such as available uplink synchronization sequences, the number of terminals to be accessed, the type of terminals to be accessed, and access delay.

In one embodiment, different terminals have different service types. For example, a terminal with real-time service transmission requirements needs to perform channel measurement before the service starts, and the wireless link connection establishment takes a long time. The terminal with only non-real-time service transmission does not need to perform channel measurement before the service starts, and the wireless link connection establishment takes a short time. Based on this, all terminals can be allocated to whitelists with different priorities according to their service types. For example, a higher priority whitelist is configured for terminals with real-time service transmission requirements to ensure that such terminals access the network preferentially.
Step S42: taking a whitelist with a highest priority as a candidate whitelist;
Step S43: in response to that there is an unaccessed terminal in the candidate whitelist, setting the unaccessed terminal as the terminal to be accessed; and
Step S44: in response to that there is no unaccessed terminal in the candidate whitelist, taking a whitelist of a next priority as a new candidate whitelist, and jumping to execute the step of in response to that there is the unaccessed terminal in the candidate whitelist, setting the unaccessed terminal as the terminal to be accessed.

In one embodiment, the whitelist with the highest priority is taken as the candidate whitelist. If there is an unaccessed terminal in the candidate whitelist, the unaccessed terminal is set as the terminal to be accessed. If there is no unaccessed terminal in the candidate whitelist, it indicates that all terminals with the highest priority have been accessed. At this time, the whitelist of the next priority can be taken as a new candidate whitelist, and the above judgment step is executed by jumping. In this way, it is ensured that the whitelists of terminals with high access priority are preferentially configured, and these whitelists are repeatedly sent through the secondary system information until all terminals are accessed before allocating the next batch of whitelists.

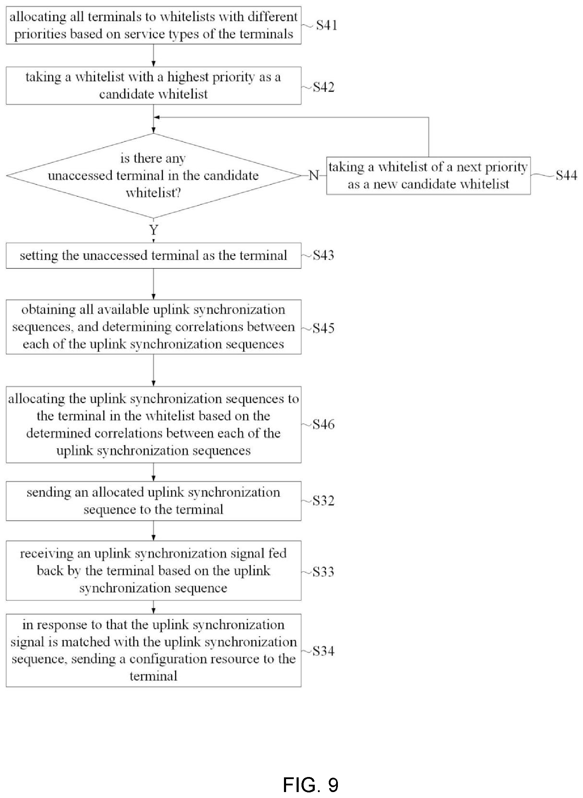

Referring to FIG. 9, step S31 includes:
step S45: obtaining all available uplink synchronization sequences, and determining correlations between each of the uplink synchronization sequences; and
step S46: allocating the uplink synchronization sequences to the terminal to be accessed in the whitelist based on the determined correlations between each of the uplink synchronization sequences.

It can be understood that terminals configured in the whitelist sent through the same secondary system information can be configured with the same parameters related to the transmit power of the uplink synchronization signal. With this feature, the terminal access success rate can be improved and the overall network terminal access delay can be reduced by reasonably allocating whitelist groups.

In one embodiment, the base station obtains all currently available uplink synchronization sequences and determines and calculates the correlation between different uplink synchronization sequences. Specifically, the correlation result can be obtained by calculating the convolution or correlation coefficient between two sequences. The closer the value is to 1, the higher the correlation between the two sequences.

In one embodiment, a correlation threshold is set according to actual requirements. Only when the correlation between two synchronization sequences exceeds the threshold is it considered high correlation. A correlation matrix is constructed according to the calculated correlation results, where the rows and columns of the matrix represent the terminals to be accessed and the synchronization sequences respectively, and the elements in the matrix represent the correlation between the corresponding terminals and the synchronization sequences.

In one embodiment, synchronization sequences with high correlation are allocated to terminals to be accessed in the whitelist according to the information of the correlation matrix. For example, the synchronization sequence with the highest correlation can be selected and allocated to the corresponding terminal according to each row of the correlation matrix.

Finally, the synchronization sequence information of each terminal in the whitelist is updated according to the allocation result, that is, the allocated synchronization sequence is associated with the terminal for subsequent use.

In this way, the uplink synchronization sequence is specified to be used by the terminal during whitelist allocation. Terminals in the whitelist sent through the same secondary system information send uplink synchronization sequences on the same time-frequency resource. Therefore, the correlation between uplink synchronization sequences can be fully considered during whitelist allocation, and synchronization sequences with low mutual interference can be allocated to the same whitelist group and sent through the same secondary system information, thereby reducing uplink synchronization signal interference and improving the demodulation performance of the receiving end. For terminals that fail to access multiple times, the whitelist group they belong to can be adjusted, or the uplink synchronization sequence used can be reallocated, or the expected receiving power of the uplink synchronization signal configured in the master system information can be increased, thereby reducing the terminal access delay and improving the terminal access success rate.

In a technical solution provided in this embodiment, the whitelist configured by the base station can control the terminal access sequence, control the number of terminals initiating uplink access on the same time-frequency resource, and also support configuring different expected receiving power of uplink synchronization signals for different terminals. For terminals that fail in uplink synchronization multiple times, the whitelist grouping can be adjusted and/or the uplink synchronization sequence can be reallocated, thereby effectively improving the success rate of uplink synchronization and reducing the delay of uplink synchronization.

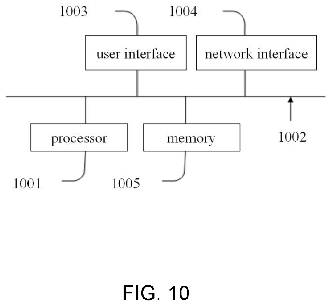

Referring to FIG. 10, FIG. 10 is a schematic structural diagram of a terminal to be accessed and a base station in a hardware operating environment involved in a solution of embodiments of the present application.

As shown in FIG. 10, the terminal to be accessed and the base station may include: a processor 1001, such as a Central Processing Unit (CPU), a communication bus 1002, a user interface 1003, a network interface 1004, and a memory 1005. The communication bus 1002 is used to realize the connection and communication between these components. The user interface 1003 may include a display, an input unit such as a keyboard, and the user interface 1003 may also include a standard wired interface and a wireless interface. The network interface 1004 may include a standard wired interface and a wireless interface (such as a Wireless-Fidelity (WI-FI) interface). The memory 1005 may be a highspeed Random Access Memory (RAM) or a stable Non-Volatile Memory (NVM), such as a disk memory. The memory 1005 may also be a storage device independent of the processor 1001.

Those skilled in the art can understand that the structure shown in FIG. 10 does not constitute a limitation on the terminal to be accessed and the base station, and may include more or fewer components than shown, or combine some components, or arrange different components.

As shown in FIG. 10, the memory 1005 as a storage medium may include an operating system, a data storage module, a network communication module, a user interface module, and an uplink synchronization program.

In the terminal to be accessed and the base station shown in FIG. 10, the network interface 1004 is mainly used for data communication with other devices. The user interface 1003 is mainly used for data interaction with users. The processor 1001 and the memory 1005 in the terminal to be accessed and the base station of the present application may be provided in the terminal to be accessed and the base station. The terminal to be accessed and the base station call the uplink synchronization program stored in the memory 1005 through the processor 1001 and execute the uplink synchronization method provided in the embodiment of the present application.

An embodiment of the present application provides a computer-readable storage medium having a computer program stored thereon. The computer program, when executed by a processor, implements the steps in any embodiment of the above uplink synchronization method.

Since the embodiments of the computer-readable storage medium part correspond to the embodiments of the method part, the description of the embodiments of the computer-readable storage medium part please refer to the description of the embodiments of the method part, which will not be repeated here.

It should be noted that, in this article, the terms "include", "comprise" or any other variants thereof are intended to cover non-exclusive inclusion, so that a process, method, article or system including a series of elements not only includes those elements, but also includes other elements not explicitly listed, or elements inherent to such process, method, article or system. Without more restrictions, an element defined by the statement "including a..." does not exclude the existence of another same element in the process, method, article or system including the element.

The serial numbers of the embodiments of the present application are merely for description and do not represent the advantages or disadvantages of the embodiments.

Through the description of the above embodiments, those skilled in the art can clearly understand that the methods of the above embodiments can be implemented by means of software plus a necessary general hardware platform, and of course, can also be implemented by hardware, but in many cases the former is a better implementation. Based on this understanding, the technical solution of the present application, essentially or the part that contributes to the prior art, can be embodied in the form of a software product. The computer software product is stored in a storage medium as described above (such as ROM/RAM, magnetic disk, optical disk) and includes several instructions to enable a terminal device (which can be a mobile phone, computer, server, network device, etc.) to execute the methods described in each embodiment of the present application.

The above are only embodiments of the present application, and do not limit the scope of the present application accordingly. Any equivalent structure or equivalent process transformation made through the contents of the description and drawings of the present application, or directly or indirectly applied in other related technical fields, are also included in the scope of the present application.

## Claims

1. An uplink synchronization method, applied to a terminal to be accessed, **characterized by** comprising following steps:
obtaining an uplink synchronization sequence allocated by a base station for the terminal to be accessed;
sending an uplink synchronization signal to the base station on a time-frequency resource corresponding to the uplink synchronization sequence; and
receiving a configuration resource fed back by the base station based on the uplink synchronization signal, and performing uplink synchronization based on the configuration resource.

2. The uplink synchronization method according to claim 1, wherein the step of obtaining the uplink synchronization sequence allocated by the base station for the terminal to be accessed comprises:
receiving master system information sent by the base station;
demodulating the master system information to obtain scheduling information of secondary system information;
receiving corresponding secondary system information based on the scheduling information of the secondary system information; and
demodulating the secondary system information to obtain the uplink synchronization sequence allocated by the base station.

3. The uplink synchronization method according to claim 2, wherein the step of receiving the master system information sent by the base station comprises:
receiving a primary synchronization signal and a secondary synchronization signal sent by the base station; and
determining a time-frequency domain position of the master system information based on the primary synchronization signal and the secondary synchronization signal, and receiving the master system information based on the time-frequency domain position.

4. The uplink synchronization method according to claim 1, wherein before the step of sending the uplink synchronization signal to the base station on the time-frequency resource corresponding to the uplink synchronization sequence, the method comprises:
obtaining an expected receiving power of the uplink synchronization signal received by the base station; and
comparing a sum of the expected receiving power and a downlink path loss with a maximum transmit power of the terminal to be accessed, and determining a transmit power of the uplink synchronization signal based on the comparison result, so that the uplink synchronization signal is sent by the terminal to be accessed based on the transmit power.

5. The uplink synchronization method according to claim 4, further comprising:
in response to that the configuration resource fed back by the base station based on the uplink synchronization signal is not received within a preset time, re-determining the transmit power of the uplink synchronization signal, and sending the uplink synchronization signal to the base station based on the re-determined transmit power.

6. The uplink synchronization method according to claim 5, wherein the step of re-determining the transmit power of the uplink synchronization signal comprises:
obtaining a current expected receiving power of the uplink synchronization signal received by the base station;
in response to that the current expected receiving power is different from an expected receiving power obtained in a previous uplink synchronization process, comparing a sum of the current expected receiving power and the downlink path loss with the maximum transmit power, and determining a latest transmit power of the uplink synchronization signal based on the comparison result; and
in response to that the current expected receiving power is same as an expected receiving power used in the previous uplink synchronization process, calculating a sum of the current expected receiving power, the downlink path loss and a preset power adjustment amount, and comparing the sum with the maximum transmit power to determine the latest transmit power of the uplink synchronization signal.

7. An uplink synchronization method, applied to a base station, **characterized by** comprising following steps:
allocating an uplink synchronization sequence for a terminal to be accessed;
sending an allocated uplink synchronization sequence to the terminal to be accessed;
receiving an uplink synchronization signal fed back by the terminal to be accessed based on the uplink synchronization sequence; and
in response to that the uplink synchronization signal is matched with the uplink synchronization sequence, sending a configuration resource to the terminal to be accessed.

8. The uplink synchronization method according to claim 7, wherein before the step of allocating the uplink synchronization sequence for the terminal to be accessed, the method comprises:
allocating all terminals to whitelists with different priorities based on service types of the terminals;
taking a whitelist with a highest priority as a candidate whitelist;
in response to that there is an unaccessed terminal in the candidate whitelist, setting the unaccessed terminal as the terminal to be accessed; and
in response to that there is no unaccessed terminal in the candidate whitelist, taking a whitelist of a next priority as a new candidate whitelist, and jumping to execute the step of in response to that there is the unaccessed terminal in the candidate whitelist, setting the unaccessed terminal as the terminal to be accessed.

9. The uplink synchronization method according to claim 8, wherein the step of allocating the uplink synchronization sequence for the terminal to be accessed comprises:
obtaining all available uplink synchronization sequences, and determining correlations between each of the uplink synchronization sequences; and
allocating the uplink synchronization sequences to the terminal to be accessed in the whitelist based on the determined correlations between each of the uplink synchronization sequences.

10. A terminal to be accessed, **characterized by** comprising: a memory, a processor, and an uplink synchronization program stored in the memory and operable on the processor, wherein the uplink synchronization program is configured to implement the steps of the uplink synchronization method according to any one of claims 1 to 6.

11. A base station, **characterized by** comprising: a memory, a processor, and an uplink synchronization program stored in the memory and operable on the processor, wherein the uplink synchronization program is configured to implement the steps of the uplink synchronization method according to any one of claims 7 to 9.

12. A computer-readable storage medium, **characterized by** storing an uplink synchronization program, wherein the uplink synchronization program, when executed by a processor, implements the steps of the uplink synchronization method according to any one of claims 1 to 6 or 7 to 9.
